(19) **Europäisches Patentamt / European Patent Office / Office européen des brevets**

(11) **EP 2 933 605 A1**

(12) # EUROPEAN PATENT APPLICATION

(43) Date of publication:
**21.10.2015 Bulletin 2015/43**

(51) Int Cl.:
**G01C 21/16** (2006.01)  **G02B 27/64** (2006.01)
**G03B 37/02** (2006.01)  **G06T 7/00** (2006.01)
**H04N 5/232** (2006.01)

(21) Application number: **15160437.8**

(22) Date of filing: **24.03.2015**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA**

(30) Priority: **17.04.2014 GB 201406926**

(71) Applicant: **Nokia Technologies OY 02610 Espoo (FI)**

(72) Inventor: **Spas, Lukasz 22220 Lund (SE)**

(74) Representative: **Nokia Corporation Intellectual Property Department Karakaari 7 02610 Espoo (FI)**

(54) **A device orientation correction method for panorama images**

(57)    The invention relates to a method, comprising: providing orientation measurement data of a gyroscope and accelerometer for a device, performing a sensor fusion algorithm for provided orientation measurement data for determining a sensor-based estimate of orientation of the device, and performing a correction step, wherein an viewfinder image matching algorithm is performed for aligning viewfinder frames captured by a camera sensor of the device for determining an error of sensor-based estimate of orientation of the device. The invention further relates to an apparatus and a computer program product that perform the method.

Fig. 3

**EP 2 933 605 A1**

## Description

Background

Today, mobile phones and other electronic devices offer users a wide range of applications relating to device rotation estimation. Sensors like gyroscope, accelerometer, magnetometer, etc. are available in many everyday devices, such as, cameras, mobile phones, game consoles, tablets, smartphones, etc. There are many sensor fusion algorithms utilizing different sensors to estimate device rotation for many different purposes. Most common algorithms utilize gyroscope, accelerometer and magnetometer, which altogether are usually called MARG (Magnetic Angular Rate and Gravitational) sensor, to provide accurate device orientation. However, in some applications use of complete MARG sensor is not possible. For example, a magnetic field may affect the operation of magnetometer and it may therefore be an unsuitable sensor in some environments. Moreover, MARG sensors fusion algorithms are usually very complex and computationally heavy and may not therefore be used in every application.

Summary

Various aspects of the invention include a method, an apparatus, and a computer readable medium comprising a computer program stored therein, which are characterized by what is stated in the independent claims. Various embodiments of the invention are disclosed in the dependent claims.

A rotation or orientation estimation for devices comprising a accelerometer, a gyroscope and a camera sensor may be computed by using a camera corrected fusion algorithm according to the invention. The camera corrected fusion algorithm combines a camera correction step comprising, for example, a camera sensor's image matching algorithm matching camera viewfinder images with sensor fusion algorithm, for example, an inertial measurement unit (IMU) fusion algorithm such as gradient descent filter algorithm or Extended Kalman Filter algorithm. In the orientation estimation algorithm the camera sensor is used together with IMU sensors for estimating rotation and orientation of the device i.e. to produce orientation data.

According to a first aspect, there is provided a method, comprising providing orientation measurement data of a gyroscope and accelerometer for a device, performing a sensor fusion algorithm for provided orientation measurement data for determining a sensor-based estimate of orientation of the device, and performing a correction step, wherein an image matching algorithm is performed for aligning viewfinder frames captured by a camera sensor of the device for determining an error of sensor-based estimate of orientation of the device.

According to an embodiment, the method further comprises correcting the sensor fusion algorithm by compensating the integration error of the gyroscope in at least one direction by summing the error of sensor-based estimate of orientation of the device to the output value of the sensor fusion algorithm. According to an embodiment, the method further comprises correcting the alignment of said viewfinder frames on the basis of output of the corrected sensor fusion algorithm. According to an embodiment, the image matching algorithm is performed for still viewfinder frames or sharp viewfinder frames. According to an embodiment, the image matching algorithm is performed if rotation rate of the device at the time of capturing a viewfinder frame is below a threshold level. According to an embodiment, the sensor fusion algorithm is a gradient descent filter algorithm. According to an embodiment, the image matching algorithm is performed if a matching confidence level of viewfinder frames arranged to be matched is determined to exceed a predetermined threshold value arranged for the matching confidence level. According to an embodiment, the image matching algorithm comprises one of feature-based matching algorithm or pixel-to-pixel alignment algorithm.

According to a second aspect, there is provided an apparatus comprising at least one processor, memory including computer program code, the memory and the computer program code configured to, with the at least one processor, cause the apparatus to perform at least the following: provide orientation measurement data of a gyroscope and accelerometer for a device, perform a sensor fusion algorithm for provided orientation measurement data for determining a sensor-based estimate of orientation of the device, and perform a correction step, wherein an image matching algorithm is performed for aligning viewfinder frames captured by a camera sensor of the device for determining an error of sensor-based estimate of orientation of the device.

According to an embodiment, the computer program code is further configured to, with the at least one processor, cause the apparatus to: correct the sensor fusion algorithm by compensating the integration error of the gyroscope in at least one direction by summing the error of sensor-based estimate of orientation of the device to the output value of the sensor fusion algorithm. According to an embodiment, the computer program code is further configured to, with the at least one processor, cause the apparatus to: correct the alignment of said viewfinder frames on the basis of output of the corrected sensor fusion algorithm. According to an embodiment, the image matching algorithm is performed for sharp viewfinder frames. According to an embodiment, the image matching algorithm is performed if rotation rate of the device at the time of capturing a viewfinder frame is below a threshold level. According to an embodiment, the sensor fusion algorithm is a gradient descent filter algorithm. According to an embodiment, the image matching algorithm is performed if a matching confidence level of viewfinder frames arranged to be matched is determined to exceed a predetermined threshold value arranged for the matching confidence level. According to an embodiment, the image matching algorithm comprises one of feature-based matching algorithm or pixel-to-pixel alignment algorithm.

According to a third aspect, there is provided an apparatus comprising means for providing orientation measurement data of a gyroscope and accelerometer for a device; means for performing a sensor fusion algorithm for provided orientation measurement data for determining a sensor-based estimate of orientation of the device, and means for performing a correction step, wherein an image matching algorithm is performed for aligning viewfinder frames captured by a camera sensor of the device for determining an error of sensor-based estimate of orientation of the device.

According to a fourth aspect, there is provided a computer program product embodied on a non-transitory computer readable medium, comprising computer program code configured to, when executed on at least one processor, cause an apparatus to: provide orientation measurement data of a gyroscope and accelerometer for a device, perform a sensor fusion algorithm for provided orientation measurement data for determining a sensor-based estimate of orientation of the device, and perform a correction step, wherein an image matching algorithm is performed for aligning viewfinder frames captured by a camera sensor of the device for determining an error of sensor-based estimate of orientation of the device.

According to an embodiment, the computer program code is further configured to, with the at least one processor, cause the apparatus to: correct the sensor fusion algorithm by compensating the integration error of the gyroscope in at least one direction by summing the error of sensor-based estimate of orientation of the device to the output value of the sensor fusion algorithm. According to an embodiment, the computer program code is further configured to, with the at least one processor, cause the apparatus to: correct the alignment of said viewfinder frames on the basis of output of the corrected sensor fusion algorithm. According to an embodiment, the image matching algorithm is performed for sharp viewfinder frames. According to an embodiment, the image matching algorithm is performed if rotation rate of the device at the time of capturing a viewfinder frame is below a threshold level. According to an embodiment, the sensor fusion algorithm is a gradient descent filter algorithm. According to an embodiment, the image matching algorithm is performed if a matching confidence level of viewfinder frames arranged to be matched is determined to exceed a predetermined threshold value arranged for the matching confidence level. According to an embodiment, the image matching algorithm comprises one of feature-based matching algorithm or pixel-to-pixel alignment algorithm.

## Description of the Drawings

In the following, various embodiments of the invention will be described in more detail with reference to the appended drawings, in which

Fig. 1    shows an example of a device according to an embodiment;

Fig. 2    shows an example of a layout of an apparatus;

Fig.3     shows a block diagram of a camera according to an embodiment;

Fig. 4    shows a flow chart of a battery state determining method according to an example embodiment.

## Description of Example Embodiments

In panorama or wide-angle applications an accurate tri-dimensional device rotation sensing is required to be able to determine translation or rotation of a device between subsequent camera viewfinder frames. Orientation data determining translation or rotation of the device between subsequent camera viewfinder frames, for example, between a first captured image and a second captured image, will enable creating of a real-time user experience of a panorama image under construction, for example, on a display of a device. The real-time user experience may be shown to the user at a time of capturing the images that would be used for creating the panorama image, thereby previewing what the finished panorama image might look like. The device may use the orientation data to view captured images as aligned in its display while imaging further images for panorama image even before a final stitching algorithm is performed on full-sized images. In an example embodiment, the term 'panorama image' refers to images associated with a wider or elongated field of view. Orientation data may be achieved by using sensor fusion algorithm for measurement data of the sensors, wherein the measurement data relates to, for example, velocity, orientation, and/or gravitational forces of the device.

There exist many sensor fusion algorithms for providing accurate device orientation data utilizing different subsets of sensors, for example, gyroscopes, accelerometers, magnetometers, etc. Multi-sensor data fusion is a process of integrating information from multiple sensors to produce specific and comprehensive unified data about orientation.

Many of sensor fusion algorithms use computational heavy Extended Kalman Filter that composes readings/measurement data of gyroscope, accelerometer and magnetometer i.e. Magnetic Angular Rate and Gravitational (MARG) sensors. As mentioned, such algorithms are usually computationally heavy and may not therefore be used in every device or application of device. There may be also some other reason why Extended Kalman Filter is not usable in every device, for example, some applications of devices may require use of limited set of sensors in which case all MARG sensors cannot be used for measurements even if their measurement data would be valuable for determining accurate device orientation data. For example, a magnetometer may require calibration in order to produce accurate data. Calibration of magnetometer may require sophisticated and computationally complex algorithms. In addition, a magnetometer may also be affected in a vicinity of different magnetic field sources i.e. measurements of the earth's magnetic field will be distorted by the presence of ferromagnetic elements in the vicinity of the magnetometer. Therefore, a magnetometer would not be applicable in all environments.

There exists also lighter sensor fusion algorithms i.e. orientation filters composing readings i.e. measurements of sensors of an inertial measurement unit (IMU) of a device for providing accurate device orientation data. One example of a sensor fusion algorithm is a Gradient descent filter algorithm. A device comprising an inertial measurement unit (IMU) may be called an IMU device. The IMU device may comprise an IMU as a chip. An inertial measurement unit, IMU, is an electronic device that measures and reports on velocity, orientation, and gravitational forces, using at least a combination of accelerometers and gyroscopes. The IMU may also sometimes comprise a magnetometer(s). However, magnetometers are not suitable for some applications as mentioned above, for example, due vicinity of magnetic field sources or complex calibration algorithms of magnetometers.

However, algorithms for sensors of an IMU device may not be accurate as output of a gyroscope may drift with time due to integration and its drift may not be compensated in all 3 axes (yaw, pitch and roll). An accelerometer measures the acceleration in terms of g in three dimensions, whereas the gyroscope measures in radians. Therefore, drift(s), for example, the horizontal drift, of the gyroscope may not be compensated by the accelerometer's measurements while determining orientation data. If only accelerometer(s) and gyroscope(s) are used in sensor fusion algorithm(s), for providing accurate device orientation data, it may be possible that the drift(s) of the gyroscope in one or more direction defectively affects orientation data. The drift(s) may defectively affect, via the orientation data, creating of preview of a panorama image under construction.

However, instead of determining orientation data only on the basis of readings of gyroscope(s) and accelerometer(s) by an IMU sensor fusion algorithm, it is possible to determine orientation data by a camera corrected fusion algorithm combining IMU sensors fusion algorithm with a camera correction step comprising an image matching algorithm, for example, a viewfinder matching algorithm, to match camera viewfinder images. The orientation data may also be called as image alignment data. The camera correction step may correct device orientation data provided by the IMU sensor fusion algorithm. In other words, the camera corrected fusion algorithm is an analytically derived and optimised sensor fusion algorithm. For example, optimised gradient descent filter algorithm, using accelerometer and camera sensor data for computing the direction of the gyroscope measurement error, for example, drift of a gyroscope in one or more axes as a quaternion derivative. The quaternion is a four-dimensional complex number that can be used to represent the orientation of a ridged body or coordinate frame in three-dimensional space. The advantage of the camera corrected fusion algorithm is enhancement of the real-time performance in addition to a lightening of calculation comparing to quaternion based Extended Kalman Filter calculation. In addition, it may improve performance and deliver better real-time user experience in final product e.g. in final panorama image. The camera corrected fusion algorithm is suitable for camera and panorama applications that need accurate and visually optimal orientation estimation. The camera corrected fusion algorithm takes into account what camera sensor sees which enables proper alignment of images from the visual point of view.

A device may be a mobile device or any other device suitable for the purpose comprising and/or connected to an IMU with at least one accelerometer sensor, at least one gyroscope sensor(s) and at least one camera sensor. The device is capable of creating panorama images while a preview of a panorama image in preparation may be displayed in real-time on a display of the device and while images for the panorama image are captured. The device may be, for example, a mobile phone, a mobile computer, a mobile collaboration device, a mobile internet device, a smartphone, a tablet computer, a tablet personal computer (PC), a personal digital assistant, a handheld game console, a portable media player, a digital still camera (DSC), a digital video camera (DVC or digital camcorder), a pager, or a personal navigation device (PND).

As an example, a camera corrected fusion algorithm according to an example embodiment, may use measurement data of sensors of a device, for example, smartphone's sensors like gyroscope and accelerometer to provide tri-dimensional rotation/orientation information data. This rotation/orientation data may be optimized by using the camera sensor and a camera correction step of the device for compensating gyroscope's rotation drift in one or more axes. In other words, 3D rotation model is used to correct and calibrate gyroscope i.e. constantly improve orientation estimation from the first capture of an image i.e. viewfinder frame and during the whole panorama image acquisition. By this kind of solution, accuracy of the fusion algorithm may be improved and therefore accuracy of aligning of images may be improved. Images for creating a panorama image may be taken in any direction, vertical, horizontal, or diagonal. In addition, images for camera correction step may be taken in any direction, vertical, horizontal, or diagonal.

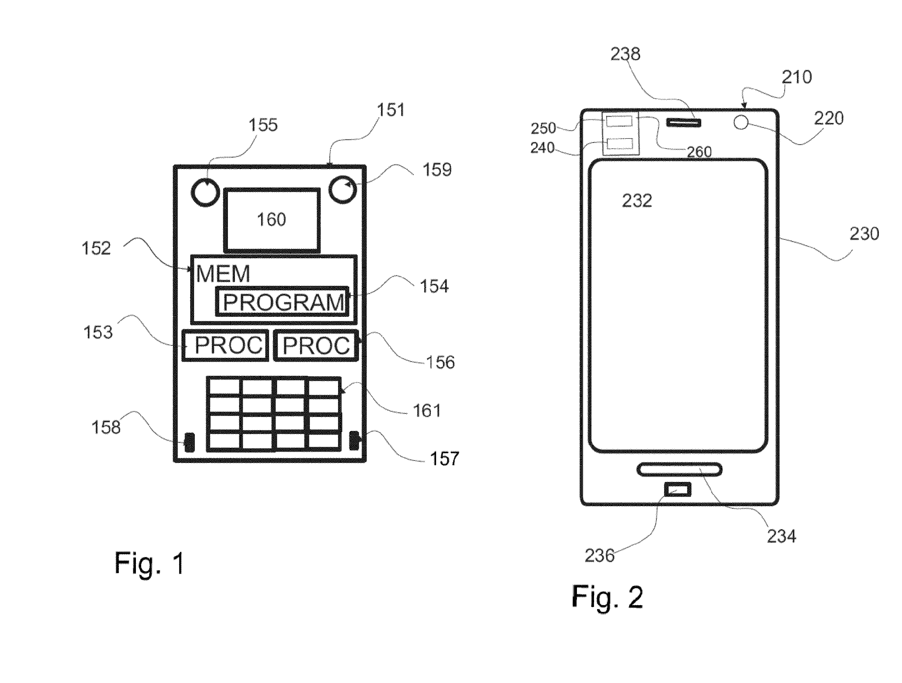

Fig. 1 shows an example of a device according to an embodiment.

In an example embodiment, the plurality of images may be captured in an arbitrary direction to capture the scene. It is noted that each image may correspond to at least a portion of the scene such that the adjacent images, for example, the first image and the second image of the plurality of images may be used to generate the panorama image of the scene.

The apparatus 151 contains memory 152, at least one processor 153 and 156, and computer program code 154 residing in the memory 152. The apparatus according to the example of Figure 1, also has one or more cameras 155 and 159 for capturing image data, for example video. One of the cameras 155, 159 can be an IR (Infrared) camera, for example. The apparatus may also contain one, two or more microphones 157 and 158 for capturing sound. The apparatus may also contain sensor for generating sensor data relating to the apparatus' relationship to the surroundings. The apparatus may also comprise one or more displays 160 for viewing single-view, stereoscopic (2-view) or multiview (more-than-2-view) and/or previewing images. Anyone of the displays 160 may be extended at least partly on the back cover of the apparatus. The apparatus 151 also comprises an interface means (e.g. a user interface) which allows a user to interact with the apparatus. The user interface means is implemented either using one or more of the following: the display 160, a keypad 161, voice control, or other structures. The apparatus may be configured to connect to another device e.g. by means of a communication block (not shown in Fig. 1) able to receive and/or transmit information through a wireless or wired network.

Figure 2 shows a layout of an apparatus according to an example embodiment. The apparatus 210 is for example a mobile terminal (e.g. a mobile phone, a smart phone, a camera device, a tablet device) or other user equipment of a wireless communication system. Embodiments of the invention may be implemented within any electronic device or apparatus such a personal computer and a laptop computer.

The apparatus 210 shown in Figure 2 comprises a housing 230 for incorporating and protecting the apparatus. The apparatus 210 further comprises a display 232 in the form of e.g. a liquid crystal display. In other embodiments of the invention, the display is any suitable display technology suitable to display an image or video. The apparatus 210 may further comprise a keypad 234 or other data input means. In other embodiments of the invention any suitable data or user interface mechanism may be employed. For example, the user interface may be implemented as a virtual keyboard or data entry system as part of a touch-sensitive display. The apparatus may comprise a microphone 236 or any suitable audio input which may be a digital or analogue signal input. The apparatus 210 may further comprise an audio output device, which in embodiments of the invention may be any one of: an earpiece 238, speaker of an analogue audio or digital audio output connection. The apparatus 210 of Figure 2 also comprise a battery. The apparatus 210 according to an embodiment may also comprise an infrared port for short range line of sight communication to other devices. In other embodiments, the apparatus 210 may further comprise any suitable short range communication solution such as for example a Bluetooth wireless connection, Near Field Communication (NFC) connection or a USB/firewire wired connection. The apparatus 210 according to an embodiment comprises a camera or is connected to one wirelessly or with wires.

In an embodiment, the multimedia content, for example, the images may be prerecorded and stored in the apparatus, for example, in the device 151. In another embodiment, the multimedia content may be captured by utilizing the device 151, and stored in the memory 152 of the device 151. In an example embodiment, the processor 153, 156 is configured to, with the content of the memory 152, and optionally with other components described herein, to cause the device 151 to facilitate receipt of a plurality of images associated with the scene for generating a panorama image. For instance, the apparatus is caused to receive a first image and a second image associated with a scene such that the first image and the second image include at least an overlapping region between them. In an example embodiment, a processing means may be configured to facilitate receipt of a plurality of images, for example the first image and the second image associated with the scene for generating a panorama image. An example of the processing means may include the processor 153, 156.

In addition, the processor 153, 156 is configured to, with the content of the memory 152, and with sensors 240, 250 measurement data along with camera sensor 220, to cause the device 151, 210 to display a panorama image in progress i.e. a preview of the panorama in a display 160, 232 of the device 151, 210, wherein displayed images are aligned. And wherein the processor 153, 156 is configured to, with the content of the memory 152, to correct the orientation information received from gyroscope and accelerometer fusion algorithm by using viewfinder frames alignment i.e. image matching algorithm, which output is arranged to correct the gyroscope and accelerometer fusion algorithm. Corrected orientation information is arranged to be used in aligning of images for panorama image in real-time preview during formation of panorama images i.e. while images for panorama images are captured.

In the following, several embodiments of the invention will be described in the context of a device with a camera and IMU sensors that use the camera corrected fusion algorithm for determining its orientation.

Figure 1 shows an example of a device 151 according to an embodiment of the invention. Figure 2 shows an example of a layout of a device 210 according to an embodiment of the invention. It should be understood, however, that the device 151, 210 as illustrated and hereinafter described is merely illustrative of one type of device that may benefit from various embodiments, and therefore should not be taken to limit the scope of the embodiments. As such, it should be appreciated that at least some of the components described below in connection with the device 151, 210 may be optional and thus in an example embodiment may include more, less or different components than those described in connection with the example embodiment of Figure 1 or 2.

The device 151 could be any of a number of types of mobile electronic devices, for example, portable digital assistants (PDAs), pagers, mobile televisions, gaming devices, cellular phones, all types of computers (for example, laptops, mobile computers or desktops), cameras, audio/video players, radios, global positioning system (GPS) devices, media players, mobile digital assistants, or any combination of the aforementioned, and other types of communications devices. The device 151 comprises a display 160, which may be a touch-screen display (e.g. capacitive, resistive) or a regular display configured to display, for example, a captured image(s) and panorama in progress. The device 151 according to Figure 1 further comprises at least one camera sensor 155, 159 being situated on the same side of the device 151 with the display, or on the opposite side. According to an embodiment, the device 151 may comprise two cameras placed on opposite sides of the device 151, e.g. front side (i.e. display side) and rear side of the device 151. In some embodiments, the device 151 may include more than two cameras. The camera sensor 155, 159 may include a digital camera capable of forming a digital image file from a captured image. As such, the camera sensor 155, 159 includes all hardware, such as a lens or other optical component(s), and software for creating a digital image file from a captured image. Alternatively, the camera sensor 155, 159 may include the hardware needed to view an image, while a memory device of the device 151 stores instructions for execution by the processor 153, 159 in the form of software to create a digital image file from a captured image.

As illustrated in Figure 2, the device 210 may have one or more physical buttons 234 and one or more touch-screen buttons. In some embodiments, the device may not have any physical button and the user can interact with the device 210 by using the touch screen. The device 210 comprises a keypad 161 (Fig. 1) being provided either on the display as a touch-screen keypad or on the housing of the device 210 as a physical keypad. The device 210 further comprise an accelerometer 240, for example, tri-axis accelerometer, for measuring proper acceleration of the device 210 and gravity force acceleration of the device 210 and a gyroscope 250, for example, a tri-axis gyroscope, for measuring angular rate, speed of rotation, of the device 210. The accelerometer 240 and gyroscope 250 may be arranged as an IMU into the device 210. The device 210 may further comprise one or more other sensors, such as magnetometer etc. The device 210 may also comprise a communication interface configured to connect the device 210 to another device, e.g. a server or a terminal, via wireless and/or wired network, and to receive and/or transmit data by said wireless/wired network. Wireless communication can be based on any cellular or non-cellular technology, for example GSM (Global System for Mobile communication), WCDMA (Wideband Code Division Multiple Access), CDMA (Code Division Multiple Access). Wireless communication can also relate to short range communication such as Wireless Local Area Network (WLAN), Bluetooth®, etc. The device 210 also comprises a battery or similar powering means. The device 210 may also comprise a vibrator for providing movement of the device 210 in silent mode and for providing tactile feedback in user interface situations. The device 210 may further comprise a microphone 236 and loudspeaker 238 to receive and transmit audio.

The device 151 further comprises a memory 152 configured to store computer program code used for computing orientation data i.e. image alignment data for the device 151 and for displaying and aligning panorama images in progress in real-time. Determining of orientation and image alignment software may be implemented as separate application and/or it may be a part of the operating system of the device 151. The device 151 comprises a processor 153, 156 that executes the program code to perform the device's functionality. The device 151 further comprises an input/output element to provide e.g. real time panorama image in progress views to a display 160 of the device 151 and to receive user input through input elements, such as camera 155, 159, accelerometer 240 or gyroscope 250.

Below is described an example of a panorama image generation by the device. The processor 153, 156 is configured, with the content of the memory 152, and optionally with other components described herein, to cause the device 151 to facilitate access images associated with a scene for generating a panorama image of a scene. Panorama image may include a two-dimensional construction of a three-dimensional scene. In some embodiments, the panorama image may provide about 360 degrees view of the scene. The panorama image is in this example generated by capturing multiple still images of the scene or sharp images of the scene. The image acquisition may be performed by a camera 155, 159 or some other image capturing device. During image acquisition, the multimedia content associated with the scene may be captured by displacing the device 151 in at least one direction. The camera 155, 159 may be moved around the scene either from left direction to right direction or from right direction to left direction or from top direction to bottom direction or from bottom direction to top direction, and so on. In an embodiment, the camera may be rotated in clockwise or counter-clockwise direction for capturing images for generating panorama image. The device 151 includes a position sensor for determining direction of movement and orientation of the device 151 for capturing the multimedia content.

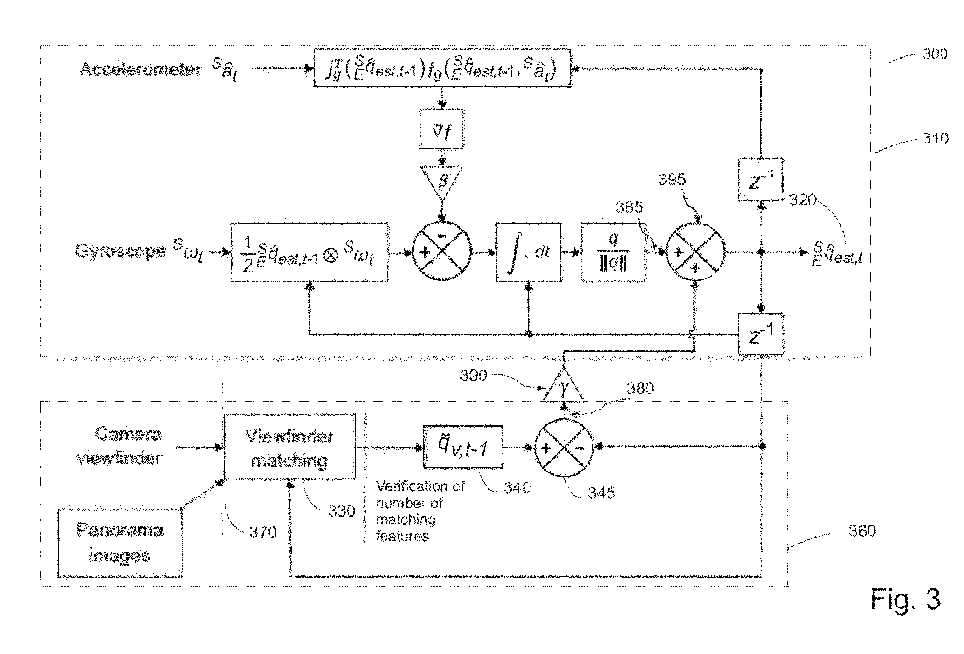

Figure 3 shows an example of a block diagram of a camera corrected fusion algorithm 300. The upper part of the block diagram is a known gradient descent filter algorithm 310 i.e. a sensor fusion algorithm for an IMU implementation.

The gradient descent filter algorithm 310 is arranged to fusion measurements of an accelerometer and a gyroscope, wherein the output of that algorithm 310 is the estimated orientation 320. The lower part of the block diagram is a camera correction step 360 that is arranged to compensate the integration error(s), drift(s), of the gyroscope in one or more direction(s) and to improve orientation estimation for better alignment of images from visual quality point of view. The camera correction step 360 comprises an image matching algorithm 330 that calculates rotation between two images around the focal point. In the correction step 360 estimated error 380 i.e. output of the camera correction step 360 and the output 385 of gradient descent filter algorithm 310 are combined i.e. summed in a summing element 395. The estimated error 380 is calculated (in a summing element 345) as a difference between an output and an input of the image matching algorithm 330. The input of the image matching algorithm 330 is defined as the device orientation at the time when viewfinder image is obtained, which is the starting point for the algorithm 300. The output of the image matching algorithm 330 is the device orientation based on viewfinder image alignment at the same time as the input of the image matching algorithm 330. Smoothing function with wage $\gamma$ 390 provides smooth drift compensation within the time to ensure better user experience without noticeable jittering in the final corrected estimate of the device orientation. The function ensures that after $\gamma$ 390 iterations of gradient descent filter 310 entire estimated error 380 is reflected into the final device orientation. Length of single iteration of gradient descent filter 310 is inversely proportional to the IMU sensors sampling rate.

Image matching algorithm 330 may be performed for sharp viewfinder images. The camera may obtain sharp images or images sharp enough even if it moves slowly. Whereas, still images are captured while the camera is not moving. However, in an example embodiment, the term 'sharp' refers to type of images, viewfinder images or viewfinder frames that are such that the image matching algorithm 330 may/can be performed i.e. these images may be sharp images, sharp enough images or still images. In addition, the correction step 360 may be performed when rotation rate of the device (measured by the gyroscope, for example, a tri-axis gyroscope) at the time of obtaining viewfinder preview frame has value below a certain level of speed (expressed in radians per second). This may ensure that the device is still enough to obtain sharp viewfinder frames This certain level of speed may depend on the user camera sensor. Some camera sensors are capable of taking sharp images even when slowly moving compared to others. This level is one of configurable parameters of the invention.

Accelerometer may also be used to verify that no additional force (except of gravitational force) is experienced by the device. In other words, this ensures that device doesn't experience any linear acceleration besides gravitational acceleration. This can be done, for example, by calculating running standard deviation (standard deviation of last N number of accelerometer data, wherein N depends on sampling frequency of accelerometer and wherein N should be chosen according to requirements of specific use case or application) and checking if that value is less than certain threshold. This step could be an addition to the verification of rotation rate described in previous paragraph

[0037] Gyroscope and accelerometer may be sampled i.e. measurement may be performed frequently, for example, with frequency of 200Hz. Whereas the image matching algorithm 330 is arranged to be performed less frequently, for example, 1-2 times per second or even more less frequently. Measurement data of the gyroscope and accelerometer are used in gradient descent filter algorithm 310 after every measurement and estimated error 380 is included in the output 385 of gradient descent filter algorithm 310 through the smoothing function 390 and summing element 395 only if viewfinder-based error estimate is available.

The image matching algorithm 330 gives as an output a rotation estimate that may be used to calculate the estimated error 380. Matching confidence level of image matching algorithm 330, may be, for example, a value of matching confidence level between obtained viewfinder frame and a set of captured panorama images. The value of matching confidence level may be, for example, matching features found in feature-based algorithm. The matching confidence level may be used to determine confidence level of the match i.e. to indicate how reliable the matching is. If confidence level of the matching is high enough, i.e. the value of the matching confidence level exceeds a predetermined threshold value arranged for the matching confidence level value, the correction will/could be performed. Otherwise viewfinder-based estimated rotation i.e. correction step 360 is canceled for this particular viewfinder frame. This is due to the fact that the correction step 360 with too low number of matched features may instead of improving the estimated device orientation, destroy it or dilute quality of the estimated device orientation.

There are a couple of situations when viewfinder-based correction step 360 may be ignored. Firstly, for example, if image obtained from a camera viewfinder contains content that doesn't contain any characteristic and static content i.e. edges, textures, etc., but instead it contains large areas filled with solid color i.e. clear sky or moving objects i.e. persons walks through captured scene. Secondly, for example, if an image obtained from a camera viewfinder doesn't contain enough area(s) that are common with already captured panorama images. In other words overlap between the current viewfinder frames, obtained from the camera sensor and previously captured panorama image is insufficient. In both examples, the correction step 360 may not be performed because there is no information in the image that would let the matching algorithm 330 to compute reliable rotation that could be used in estimation of error 380. After captured panorama image the user re-aims the camera so that the viewfinder image has at least a predetermined value of matching confidence level with at least one already captured panorama image or after the scene has changed, for example, moving object has disappeared from the scene, the camera corrected fusion algorithm 300 may correct device's orientation i.e. compensate the integration drift introduced after last successful correction step and continue its normal operation.

At the beginning of the correction step 360 i.e. in point 370, after new viewfinder frame has arrived but before the image matching algorithm 330 for viewfinder images, the current device orientation is stored. After this the matching algorithm 330 may be performed. Before the matching algorithm 330 completes and the result becomes available for calculation of the estimated error 380, device rotation may change quickly, for example, due to fast device movement that happened after viewfinder image was obtained. Because of that estimated error 380 may be calculated as:

$$\Delta q_{err} = {}_E^S q_{v,t-1} - {}_E^S \hat{q}_{est,t-1}$$

Where ${}_E^S q_{v,t-1}$ is the rotation estimated by image matching algorithm and ${}_E^S \hat{q}_{est,t-1}$ is the input to the image matching algorithm or in other words the previously stored device rotation estimate at the time when viewfinder image was obtained. Then this estimated error may be added on top of the current device rotation estimate ${}_E^S \hat{q}_{est,t}$ i.e. added through smoothing function $\gamma$ 390 for compensating gyroscope drift or other errors of sensors.

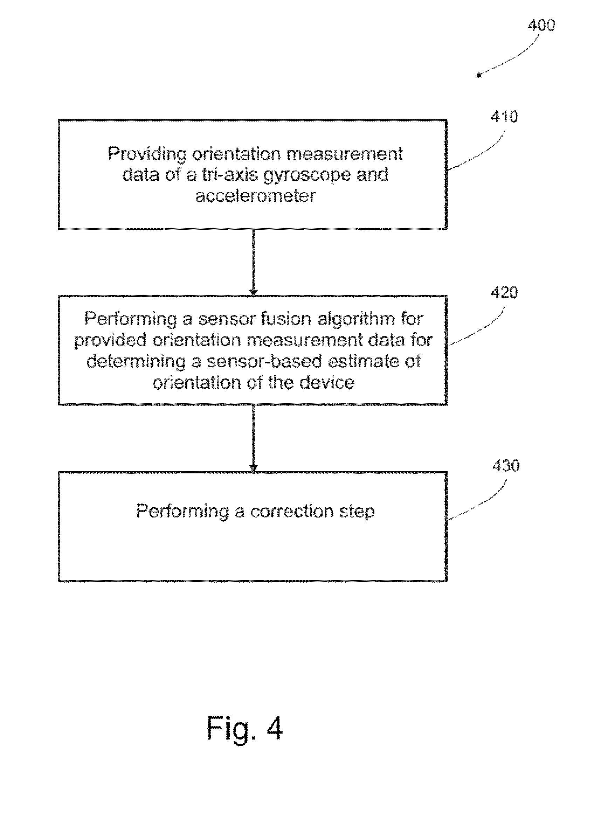

Figure 4 shows a flow chart of a battery state determining method 400 according to an example embodiment. In the method 400, in step 410, orientation measurement data of a gyroscope (for example, a tri-axis gyroscope) and accelerometer is provided for a device by sensors of the device or sensors which are connected to the device. In step 420, the device performs a sensor fusion algorithm for provided orientation measurement data for determining a sensor-based estimate of orientation of the device. In step 430, the device performs a correction step, wherein an image matching algorithm is performed for aligning viewfinder frames captured by a camera sensor of the device for determining an error of sensor-based estimate of orientation of the device. The image matching algorithm for viewfinder images may be/comprise one of, for example, feature-based matching algorithm or pixel-to-pixel alignment algorithm. The method may further comprise correcting the sensor fusion algorithm by compensating the integration error of the gyroscope in at least one direction by summing the error of sensor-based estimate of orientation of the device to the output value of the sensor fusion algorithm. In addition, the method may further comprise correcting the alignment of said viewfinder frames of panorama image on the basis of output of the corrected sensor fusion algorithm.

The various embodiments may provide several advantages in addition to above mentioned advantages. For example, when camera tracking algorithm is used for IMU sensor fusion algorithm, it is possible to estimate better device orientation data from the image alignment perspective which device orientation data directly improve visual quality of final panorama image. In addition, due to real-time preview a user may see a result of a panorama image in preparation and he may select suitable images already at a time of capturing the images for the panorama image.

The various embodiments of the invention can be implemented with the help of computer program code that resides in a memory and causes the relevant apparatuses to carry out the invention. For example, a base device may comprise circuitry and electronics for handling, receiving and transmitting data, computer program code in a memory, and a processor that, when running the computer program code, causes the device to carry out the features of an embodiment.

It is obvious that the present invention is not limited solely to the above-presented embodiments, but it can be modified within the scope of the appended claims.

**Claims**

1. A method, comprising:

   providing orientation measurement data of a gyroscope and accelerometer for a device, performing a sensor fusion algorithm for provided orientation measurement data for determining a sensor-based estimate of orientation of the device, and performing a correction step, wherein an image matching algorithm is performed for aligning viewfinder frames captured by a camera sensor of the device for determining an error of sensor-based estimate of orientation of the device.

2. A method according to claim 1, wherein the method further comprises correcting the sensor fusion algorithm by compensating the integration error of the gyroscope in at least one direction by summing the error of sensor-based estimate of orientation of the device to the output value of the sensor fusion algorithm.

3. A method according to claim 2, wherein the method further comprises correcting the alignment of said viewfinder frames on the basis of output of the corrected sensor fusion algorithm.

4. A method according to claim 1, 2 or 3, wherein the image matching algorithm is performed for sharp viewfinder frames.

5. A method according to any of the claims 1 to 4, wherein the image matching algorithm is performed if rotation rate of the device at the time of capturing a viewfinder frame is below a threshold level.

6. A method according to any of the claims 1 to 5, wherein the sensor fusion algorithm is a gradient descent filter algorithm.

7. A method according to any of the claims 1 to 6, wherein the image matching algorithm is performed if a matching confidence level of viewfinder frames arranged to be matched is determined to exceed a predetermined threshold value arranged for the matching confidence level.

8. A method according to any of the claims 1 to 7, wherein the image matching algorithm comprises one of feature-based matching algorithm or pixel-to-pixel alignment algorithm.

9. An apparatus configured to:

   provide orientation measurement data of a gyroscope and accelerometer for a device,
   perform a sensor fusion algorithm for provided orientation measurement data for determining a sensor-based estimate of orientation of the device, and
   perform a correction step, wherein an image matching algorithm is performed for aligning viewfinder frames captured by a camera sensor of the device for determining an error of sensor-based estimate of orientation of the device.

10. An apparatus according to claim 9, wherein the apparatus comprises an inertial measurement unit.

11. An apparatus according to claim 10, wherein the inertial measurement unit comprises a gyroscope and an accelerometer.

12. An apparatus according to claim 9 to 11, wherein the apparatus comprises a mobile terminal.

13. An apparatus according to any of the claims 9 to 12, wherein the apparatus is further configured to perform methods as claimed in any of the claims 2 to 8.

14. A computer program product embodied on a non-transitory computer readable medium, comprising computer program code, which when executed by an apparatus, cause the apparatus to perform the methods as claimed in any of the claims 1 to 8.

Fig. 2

Fig. 1

Fig. 3

400

410

Providing orientation measurement data of a tri-axis gyroscope and accelerometer

420

Performing a sensor fusion algorithm for provided orientation measurement data for determining a sensor-based estimate of orientation of the device

430

Performing a correction step

Fig. 4

Europäisches
Patentamt

European
Patent Office

Office européen
des brevets

## EUROPEAN SEARCH REPORT

Application Number

EP 15 16 0437

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2012/314899 A1 (COHEN MICHAEL F [US] ET AL) 13 December 2012 (2012-12-13)<br>* paragraphs [0038] - [0049] *<br>----- | 1-14 | INV.<br>G01C21/16<br>G02B27/64<br>G03B37/02<br>G06T7/00<br>H04N5/232 |
| X | SUYA YOU ET AL: "Hybrid inertial and vision tracking for augmented reality registration",<br>VIRTUAL REALITY, 1999. PROCEEDINGS., IEEE HOUSTON, TX, USA 13-17 MARCH 1999, LOS ALAMITOS, CA, USA,IEEE COMPUT. SOC, US,<br>13 March 1999 (1999-03-13), pages 260-267, XP010329315,<br>DOI: 10.1109/VR.1999.756960<br>ISBN: 978-0-7695-0093-5<br>* sections 3 and 4 *<br>----- | 1-14 | |
| X | YOU S ET AL: "Fusion of vision and gyro tracking for robust augmented reality registration",<br>PROCEEDINGS IEEE 2001 VIRTUAL REALITY. (VR). YOKOHAMA, JAPAN, MARCH 13 - 17, 2001; [PROCEEDINGS IEEE VIRTUAL REALITY.(VR)], LOS ALAMITOS, CA, IEEE COMP. SOC, US,<br>1 January 2001 (2001-01-01), pages 71-78, XP031172752,<br>DOI: 10.1109/VR.2001.913772<br>ISBN: 978-0-7695-0948-8<br>* sections 1,2,4 *<br>----- | 1-14 | TECHNICAL FIELDS SEARCHED (IPC)<br><br>G01C<br>G02B<br>G03B<br>G06T<br>H04N<br>F16M<br>G06F |

-/--

The present search report has been drawn up for all claims

| Place of search | Date of completion of the search | Examiner |
|---|---|---|
| The Hague | 28 August 2015 | Gagin, Thibaut |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

....................................................................

& : member of the same patent family, corresponding
    document

EPO FORM 1503 03.82 (P04C01)

Europäisches
Patentamt

European
Patent Office

Office européen
des brevets

## EUROPEAN SEARCH REPORT

Application Number

EP 15 16 0437

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SATOH K ET AL: "A hybrid registration method for outdoor augmented reality", AUGMENTED REALITY, 2001. PROCEEDINGS. IEEE AND ACM INTERNATIONAL SYMPO SIUM ON NEW YORK, NY, USA 29-30 OCT. 2001, LOS ALAMITOS, CA, USA,IEEE COMPUT. SOC, US, 29 October 2001 (2001-10-29), pages 67-76, XP010568049, DOI: 10.1109/ISAR.2001.970516 ISBN: 978-0-7695-1375-1 * sections 4,5 * | 1-14 | |
| A | DIVERDI S ET AL: "Envisor: Online Environment Map Construction for Mixed Reality", VIRTUAL REALITY CONFERENCE, 2008. VR '08. IEEE, IEEE, PISCATAWAY, NJ, USA, 8 March 2008 (2008-03-08), pages 19-26, XP031339993, ISBN: 978-1-4244-1971-5 * sections 3,6 * | 1-14 | TECHNICAL FIELDS SEARCHED (IPC) |
| A | Alexandre Karpenko ET AL: "Digital Video Stabilization and Rolling Shutter Correction using Gyroscopes", , 1 March 2011 (2011-03-01), XP055210192, Retrieved from the Internet: URL:https://graphics.stanford.edu/papers/s tabilization/karpenko_gyro.pdf [retrieved on 2015-08-28] * sections 1, 2, 3 * | 1-6 | |

The present search report has been drawn up for all claims

| Place of search | Date of completion of the search | Examiner |
|---|---|---|
| The Hague | 28 August 2015 | Gagin, Thibaut |

CATEGORY OF CITED DOCUMENTS

X : particularly relevant if taken alone
Y : particularly relevant if combined with another
  document of the same category
A : technological background
O : non-written disclosure
P : intermediate document

T : theory or principle underlying the invention
E : earlier patent document, but published on, or
  after the filing date
D : document cited in the application
L : document cited for other reasons

................................................................
& : member of the same patent family, corresponding
  document

EPO FORM 1503 03.82 (P04C01)

**ANNEX TO THE EUROPEAN SEARCH REPORT
ON EUROPEAN PATENT APPLICATION NO.**

EP 15 16 0437

This annex lists the patent family members relating to the patent documents cited in the above-mentioned European search report.
The members are as contained in the European Patent Office EDP file on
The European Patent Office is in no way liable for these particulars which are merely given for the purpose of information.

28-08-2015

| Patent document cited in search report | Publication date | Patent family member(s) | | Publication date |
|---|---|---|---|---|
| US 2012314899 A1 | 13-12-2012 | US | 2012314899 A1 | 13-12-2012 |
| | | US | 2015002393 A1 | 01-01-2015 |

For more details about this annex : see Official Journal of the European Patent Office, No. 12/82